Europäisches Patentamt

European Patent Office

Office européen des brevets

(19)

(11) Veröffentlichungsnummer: **0 015 316**
**A1**

(12) # EUROPÄISCHE PATENTANMELDUNG

(21) Anmeldenummer: **79104917.4**

(22) Anmeldetag: **05.12.79**

(51) Int. Cl.³: **B 32 B 27/10,** B 44 C 3/02, D 21 H 5/00, B 44 C 3/08

(30) Priorität: **27.12.78 DE 2856281**

(43) Veröffentlichungstag der Anmeldung: **17.09.80**
**Patentblatt 80/19**

(84) Benannte Vertragsstaaten: **AT BE CH FR GB IT NL SE**

(71) Anmelder: **RESOPAL WERK H. Römmler GmbH,**
**Kallstadter Strasse 1, D-6800 Mannheim 41(Käfertal)**
**(DE)**

(72) Erfinder: **Probsthain, Konrad, Dr.,**
**Johannes-Lampe-Strasse 9, D-6114 Gross-Umstadt (DE)**

(74) Vertreter: **Kempe, Wolfgang, Dr. et al, c/o Brown, Boveri**
**& Cie AG Postfach 351, D-6800 Mannheim 1 (DE)**

(54) **Nachformbare dekorative Schichtpressstoffplatte und Verfahren zu ihrer Herstellung.**

(57) Die Schichtpreßstoffplatte besteht aus mit mindestens einer Dekorschicht (1) aus mindestens einer Lage eines bahnenförmigen saugfähigen Materials, insbesondere auf Lignozellulose-Basis, das mit einem härtbaren Harz imprägniert ist. Unmittelbar unter dieser Dekorschicht (1) sind drei Kernbogen (2) angeordnet. Es handelt sich hierbei um Kraftpapierbogen, die mit einem modifizierten Phenolharz imprägniert und anschliessend getrocknet sind. Unterhalb der Kernbogen (2) schließt sich direkt eine 0,8 mm dicke Polyamidfolie (3) an. Diese drei Schichten sind zu einer die Schichtpreßstoffplatte bildenden Einheit zusammengepreßt.

0015316

RESOPAL WERK H. Römmler GmbH

Mannheim                                     21. 12. 1978

Mp.-Nr. 702/78                               ZFE/P1-Dr.Sc/Ht


## Nachformbare dekorative Schichtpreßstoffplatte

Die Erfindung betrifft eine nachformbare dekorative
Schichtpreßstoffplatte mit mindestens einer Dekorschicht
aus mindestens einer Lage eines bahnenförmigen saugfähigen Materials, insbesondere auf Lignozellulose-Basis,
das mit einem härtbaren Harz imprägniert ist, und einer
Trägerschicht erster Art, welche mindestens eine Lage
eines bahnenförmigen Materials insbesondere auf Lignozellulose-Basis enthält, welche mit einem härtbaren Harz
imprägniert ist, sowie ein Verfahren zur Herstellung eines nachgeformten Schichtpreßstoffplatten-Elementes unter
Verwendung einer Schichtstoffplatte.

Dekorative Schichtpreßstoffplatten sind schon seit langem
bekannt. Sie bestehen aus harzgetränkten Trägerbahnen,
meistens auf Zellulosebasis, die unter Einwirkung von
Druck und Wärme zu einem homogenen Verbund ausgehärtet
sind.

Die zum Imprägnieren der Trägerbahnen verwendeten Harze gehören zur Gruppe der Duroplaste und befinden sich beim Imprägnieren noch in einem niedermolekularen Zustand, in dem sie gut in Wasser oder Alkohol und anderen Lösungsmitteln löslich sind. Unter Einwirkung von Druck und Wärme kondensieren sie zu einem hochmolekularen Netzwerk. Sie sind dann weder löslich noch schmelzbar. Die Duroplaste nehmen daher bei der Aushärtung ihre endgültige Form an. Bei dekorativen Schichtpreßstoffplatten ist es jedoch gelungen, durch Modifikation der Harze und exakte Dosierung der Aushärtung den Duroplasten einen Rest von Thermoplastizität zu bewahren, so daß sich die bei der Herstellung ebenen Platten nach kurzzeitigem Erwärmen nachformen lassen. Als Faustregel gilt dabei, daß der kleinstmögliche Radius, mit dem sich eine nachformbare dekorative Schichtpreßstoffplatte ohne zu brechen auf diese Weise abwinkeln läßt, etwa das Zehnfache der Plattendicke beträgt. Diese Faustregel kann in dem üblichen Bereich der Plattendicke von 0,5 bis 1,5 mm angewendet werden. Bei größerer Plattendicke versagt sie jedoch, da hier noch viel größere Radien benötigt werden, als der Faustregel entsprechen würde. Platten von 6 mm Dicke und mehr sind, wenn sie durchgehend aus Duroplasten bestehen, überhaupt nicht nachformbar.

Um diesen Nachteil zu beseitigen, ist vorgeschlagen worden, bei der Herstellung von dicken Platten im Abstand von etwa 1 mm Dicke thermoplastische Folien geringerer Dicke zwischen die duroplastisch getränkten Trägerschichten einzulegen. Beim kurzzeitigen Erwärmen erweichen diese Zwischenschichten, so daß die duroplastischen Schichten beim Biegen aufeinander gleiten können. Wenn man dafür sorgt, daß dabei die thermoplastischen Schichten nicht aufreissen, dann können die duroplastischen Schichten nach dem Biegen in ihrer neuen Lage zueinander durch die wieder erstarrten thermoplastischen Zwischenschichten fixiert werden. Leider läßt sich dieses Verfahren nur in randnahen Bereichen durchführen, da sichdie beim

702/78 — 3 — 0015316  21. 12. 78

Biegen entstehenden Längenunterschiede zwischen den inneren und äußeren Schichten der Platte nur am Rand angleichen können und zwar, indem sich am Rand ein treppenförmiges Profil ausbildet. Die Anwendungsmöglichkeiten für dieses Verfahren sind daher sehr beschränkt.

Der Erfindung liegt daher die Aufgabe zugrunde, eine dekorative Schichtpreßstoffplatte beliebiger Dicke, insbesondere jedoch im Dickenbereich von 1,5 bis 10 mm, herzustellen, die sich unter Beibehaltung der bekannten und bewährten Oberflächeneigenschaften in beliebigem Abstand vom Plattenrand mit wesentlich kleineren Radien nachformen läßt, als der Faustregel vom Zehnfachen der Plattendicke als kleinstmöglichen Biegeradius entsprechen würde.

Diese Aufgabe wurde erfindungsgemäß gelöst durch eine weitere Trägerschicht aus einer Lage eines Thermoplasten, deren Dicke größer ist als die der Trägerschicht erster Art, wobei sich die Trägerschicht erster Art zwischen der Dekorschicht und der weiteren Trägerschicht befindet und mit diesen unter Einwirkung von Druck und Wärme verbunden ist.

Weitere vorteilhafte Ausführungsformen sind in den Unteransprüchen gekennzeichnet. Es können Thermoplaste verschiedener Art verwendet werden, sie dürfen aber bei der für die Aushärtung der duroplastischen Schichten erforderlichen Temperatur von mindestens 120 $^{o}$C und dem erforderlichen Druck von mindestens 2 N/mm$^2$ weder schmelzen noch so stark erweichen, daß sie wegfließen. Außerdem muß der Thermoplast mit der angrenzenden duroplastischen Schicht, die entweder Phenolharze oder Aminoplastharze enthalten kann, unter den Aushärtungsbedingungen dieser Harze eine feste Verbindung eingehen. Thermoplaste, die diese Bedingungen in Kombination mit mindestens einem der genannten duroplastischen Harze erfüllen, sind z. B. Polyamide, Polyvinylfluorid mit spezieller Oberflächenbehandlung, Polyacrylate mit einem Anteil von Methylacrylamid und Acrylnitril - Butadien - Styrol - Terpolymere, sogenannte ABS-Polymerisate.

0015316
21. 12. 78

Die Deckschicht auf der Sichtseite besteht stets aus duroplastischem Material, d. h. aus mindestens einem Bogen eines bahnenförmigen, saugfähigen Trägermaterials, meistens $\alpha$-Zellulosepapier, das mit Pigmenten gefärbt und/oder bedruckt sein kann, imprägniert mit duroplastischem Harz. Für die Dekorschicht werden wegen der Lichtechtheit in der Regel Aminoplastharze und wegen der Wärmestabilität insbesondere Melaminharze eingesetzt.

Die Trägerschicht erster Art kann durch anderes bahnenförmiges, saugfähiges Trägermaterial, z. B. Natronkraftpapier, imprägniert mit denselben oder anderen duroplastischen Harzen, z. B. Phenoplastharzen, gebildet sein.

In jedem Falle wird durch die erfindungsgemäße Abstimmung der Schichtdicken erreicht, daß beim Biegevorgang die sogenannte "neutrale Faser" in der Nähe oder sogar in der duroplastischen Deckschicht liegt. Diese wird daher auch beim Biegen mit relativ kleinen Radien, die wesentlich unter dem Zehnfachen der Plattendicke liegen, nicht bis zum Bruch gedehnt. Die größten Längenänderungen, Dehnungen oder Stauchungen finden vielmehr in der weichen und zähen thermoplastischen Schicht statt.

Eine besondere Ausgestaltung der Erfindung sieht beim Pressen der dekorativen Schichtpreßstoffplatten auch auf der der Sichtseite abgewandten Rückseite eine duroplastische Schicht vor. Diese kann zu der Schicht auf der Sichtseite vollkommen symmetrisch aufgebaut sein. Dadurch wird eine ebene, vollkommen verzugfreie Plattenform gewährleistet. Man kann diese Rückseite auch aufrauhen und somit beim evtl. vorgesehenen Verleimen mit einem anderen Trägermaterial, z. B. einer Holzspanplatte, die selben Techniken anwenden, die sonst beim Verleimen von dekorativen Schichtpreßstoffplatten üblich sind. Vor dem Biegen wird erfindungsgemäß die duroplastische Schicht auf der der Sichtseite abgewandten Rückseite der dekorativen Schichtpreßstoffplatte im Bereich der Krümmung entfernt. Das kann durch Schleifen, Fräsen, Hobeln oder andere geeignete Maßnahmen erfolgen.

Im folgenden wird die Erfindung anhand von Beispielen näher erläutert. Die Ziffern beziehen sich dabei auf die zugehörige Figur:

## Beispiel 1

Dieses Beispiel gibt den Stand der Technik wieder. Ein weißes, mit etwa 30 % Rutilweiß gefülltes, saugfähiges Zellulosepapier von 150 g/m$^2$ Flächengewicht wird mit einem handelsüblichen modifizierten Melaminharz imprägniert und anschließend getrocknet, so daß der Harzauftrag etwa 120 % und die Restfeuchte etwa 5 % beträgt. Dieses Dekorpapier 1 wird auf einen Stapel von 8 Kraftpapierbogen 2 gelegt, die mit einem modifizierten Phenolharz imprägniert und anschließend getrocknet sind. Der Harzauftrag beträgt etwa 50 % und die Restfeuchte etwa 8 %. Je zwei Päckchen aus jeweils 1 Dekorbogen und 8 Kernbogen werden unter Zwischenlage eines geeigneten Trennbogens zwischen zwei verchromte Messingbleche gelegt, und zwar so, daß die Dekorbogen im Kontakt mit den Messingblechen stehen und der Trennbogen in der Mitte zwischen den Kernbogen liegt. Die Messingbleche werden nach außen mit je 16 Bogen rohen, trockenen Kraftpapiers, sogenannten Pufferpapiers, abgedeckt. Der ganze Stapel wird nun zwischen die Heizplatten einer Etagenpresse gelegt, die auf 130 °C aufgeheizt sind. Die Presse wird sofort für 20 Minuten unter einen Druck von 8 N/mm$^2$ gesetzt. Danach werden die Heizplatten unter Beibehaltung des Druckes 20 Minuten mit kaltem Wasser gekühlt. Nach dem Auffahren der Presse entnimmt man außer den Hilfsmaterialien, wie Pufferpapier, Messingbleche und Trennbogen, zwei weiße dekorative Schichtpreßstoffplatten von 1,5 mm Dicke. Die weiße Oberfläche, die ein getreues Abbild der Konturen der Oberfläche der Messingbleche widerspielgelt, ist die Sichtseite. Der Dekorbogen und die 8 Kernbogen sind unter Bildung einer harten Platte miteinander verbunden, die beim Versuch der Biegung um einen Dorn mit einem Radius von weniger als 100 mm muschelig bricht. Heizt man jedoch den Dorn auf eine Temperatur von 190 °C auf und erwärmt man die Platte kurz vor und während des Biegens zusätzlich mit Infrarotstrahlung, so kann man die Platte bis herab zu einem Radius von 15 mm biegen, ohne daß sie bricht.

Einen quadratischen Abschnitt der Platte mit 50 mm Kantenlänge kann man zwei Studen in kochendes Wasser legen. Die Probe bekommt dabei weder Blasen und Risse noch spaltet sie in den Schichten. Diese sogenannte Kochprobe gibt einen wichtigen Hinweis auf ausreichende Bindung und Aushärtung.

## Beispiel 2

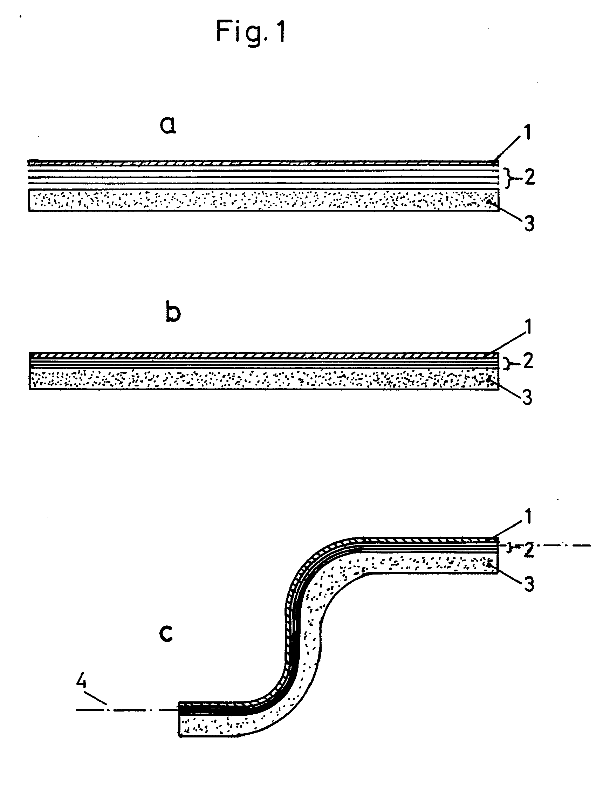

Der Versuch aus Beispiel 1 wird wiederholt mit der Ausnahme, daß der 8 Kernbogen 2 (wie in Fig. 1a dargestellt) durch eine einzige 0,8 mm dicke Polyamidfolie 3 ersetzt werden. Dabei liegen die restlichen 3 Kernbogen 2 unmittelbar unter dem Dekorbogen 1 und der Trennbogen zwischen den Polyamidfolien der beiden Päckchen.

Nach dem Pressen unter den im Beispiel 1 angegebenen Bedingungen ist die Polyamidfolie vollständig in die entstandene Schichtpreßstoffplatte von 1,5 mm Dicke integriert (Fig. 1b). Sie besteht die Kochprobe. In kaltem Zustand bricht nur die Deckschicht einschließlich Trägerschicht erster Art aus dem Dekorbogen und den 3 Kernbogen, während die Polyamidfolie, die den größten Querschnittsanteil liefert, allenfalls zäh reißt. Beim Biegen um einen beheizten Dorn erreicht man einen Minimalradius von nur 10 mm. Dabei braucht die Temperatur des Dorns nur 170 °C zu betragen. Die sogenannte "neutrale Faser" 4 liegt in der Trägerschicht erster Art (vgl. Fig. 1c).

## Beispiel 3

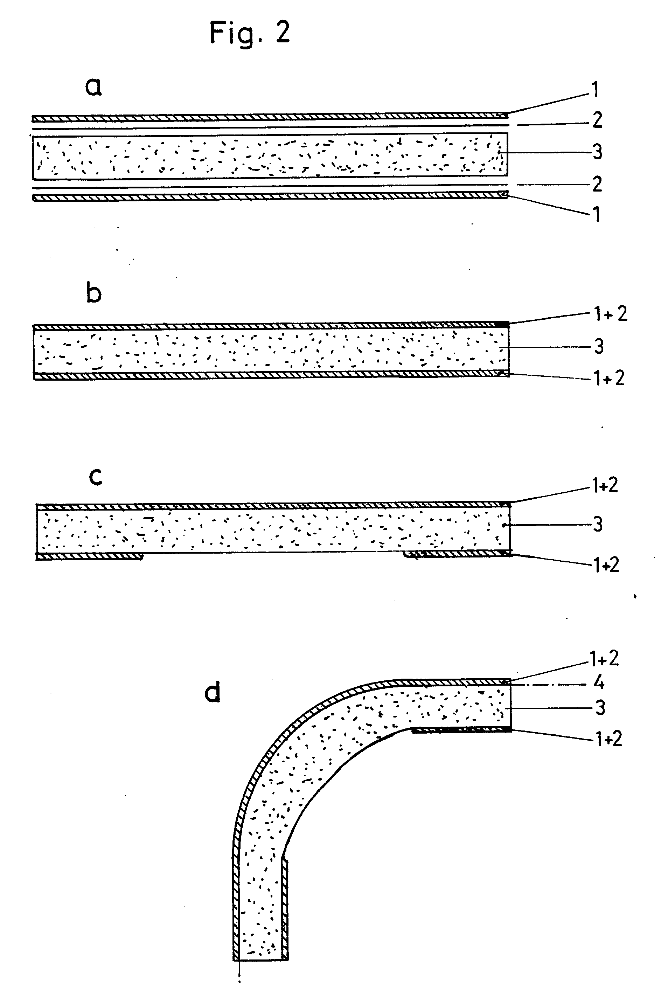

Der Versuch aus Beispiel 1 wird wiederholt mit der Ausnahme, daß statt zwei Päckchen, die durch einen Trennbogen geschieden werden, nur ein Päckchen zwischen zwei Messingblechen gepreßt und daß der Hauptteil der Trägerschicht durch eine 10 mm dicke Platte aus ABS-Polymerisaten gebildet wird. Das Päckchen ist vollkommen symmetrisch aufgebaut (siehe Figur 2a). Die beiden Dekorbogen 1 und 1' liegen außen, gefolgt von je einem Kernbogen 2 und 2'. In der Mitte liegt die ABS-Platte 3. Nach dem Pressen unter den in Beispiel 1 angegebenen Bedingungen ist die ABS-Platte vollständig in die entstandene symmetrische Schichtpreßstoffplatte von 10,5 mm Dicke integriert, (Fig. 2b). Sie besteht die Kochprobe. Sie läßt sich weder kalt noch warm mit befriedigendem Ergebnis biegen. Entfernt man jedoch in der vorgesehenen Biegezone die rückseitige Deckschicht 1' + 2' (Fig. 2c), so läßt sich die Platte nach kurzzeitigem Erwärmen auf 130 $^{\circ}$C um eine Holzform mit einem Krümmungsradius von 50 mm biegen. Die sogenante "neutrale Faser" 4 liegt dabei kurz unter der Deckschicht (Fig. 2d).

## Beispiel 4

Der Versuch aus Beispiel 3 wird wiederholt mit der Ausnahme, daß statt der ABS-Platte 65 Kernbogen gelegt werden, wie es dem Stand der Technik entspricht. Nach dem Pressen unter den im Beispiel 1 angegebenen Bedingungen ist der Verbund in der Plattenmitte noch völlig ungenügend. Bei der Kochprobe spaltet sich die Probe in den Schichten. Verlängert man jedoch die Preßzeit in der Wärme und entsprechend die Kühlzeit bis die Kochprobe fehlerfrei bestanden wird, so läßt sich die entstandene Schichtpreßstoffplatte von etwa 10 mm Dicke unter keinen Bedingungen mit einem Radius unter 300 mm biegen.

## A n s p r ü c h e

1. Nachformbare dekorative Schichtpreßstoffplatte mit mindestens einer Dekorschicht aus mindestens einer Lage eines bahnenförmigen saugfähigen Materials, insbesondere auf Lignozellulose-Basis, das mit einem härtbaren Harz imprägniert ist, und einer Trägerschicht erster Art, welche mindestens eine Lage eines bahnenförmigen Materials insbesondere auf Lignozellulose-Basis enthält, welche mit einem härtbaren Harz imprägniert ist, gekennzeichnet durch eine weitere Trägerschicht aus einer Lage eines Thermoplasten, deren Dicke größer ist als die der Trägerschicht erster Art, wobei sich die Trägerschicht erster Art zwischen der Dekorschicht und der weiteren Trägerschicht befindet und mit diesen unter Einwirkung von Druck und Wärme verbunden ist.

2. Dekorative Schichtpreßstoffplatte nach Anspruch 1, dadurch gekennzeichnet, daß die Lage eines Thermoplasten in Form einer Platte mit einer Dicke von 0,8 bis 10 mm eingebracht ist.

3. Dekorative Schichtpreßstoffplatte nach Anspruch 1 oder 2, dadurch gekennzeichnet, daß der Thermoplast aus einem Acrylnitril -Butadien - Styrol - Mischpolymerisat (ABS) besteht.

4. Dekorative Schichtpreßstoffplatte nach einem der Ansprüche 1 bis 3, dadurch gekennzeichnet, daß auf die Lage eines Thermoplasten beidseitig eine Trägerschicht erster Art aufgebracht ist.

5. Verfahren zur Herstellung eines nachgeformten Schichtpreßstoffplatten-Elementes unter Verwendung einer Schichtpreßstoffplatte nach Anspruch 4, dadurch gekennzeichnet, daß zumindest die der Sichtseite abgewandte Trägerschicht erster Art vor dem Warmverformen im Bereich der Krümmung entfernt wird.

Fig.1

a

b

c

Fig. 2

Europäisches
Patentamt

**EUROPÄISCHER RECHERCHENBERICHT**

0015316

Nummer der Anmeldung

EP 79 10 4917

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | FR - A - 2 169 009 (P. WERNLI) <br> * Ansprüche 1,2; Seite 1 * <br><br> -- | 1,5 | B 32 B 27/10 <br> B 44 C 3/02 <br> D 21 H 5/00 <br> B 44 C 3/08 |
| A | FR - A - 2 379 387 (FORMICA) | | |
| A | DE - A - 1 944 222 (PRESSWERK KONGEN) | | |
| A | DE - A - 2 735 230 (PLAMA PLASTIC) <br><br> ---- | | |

**RECHERCHIERTE SACHGEBIETE (Int. Cl. ³)**

B 32 B
B 44 C 3/02
        3/08
D 21 H 5/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze .

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-03-1980 | BLASBAND |

EPA form 1503.1 06.78